Europäisches Patentamt

European Patent Office

Office européen des brevets

(11) Numéro de publication: **0 424 247 A1**

# DEMANDE DE BREVET EUROPEEN

(21) Numéro de dépôt: **90402897.4**

(51) Int. Cl.⁵: **B25B 27/30**

(22) Date de dépôt: **16.10.90**

(30) Priorité: **18.10.89 FR 8913602**

(43) Date de publication de la demande:
**24.04.91 Bulletin 91/17**

(84) Etats contractants désignés:
**AT BE CH DE DK ES GB GR IT LI LU NL SE**

(71) Demandeur: **MECANIQUE ENERGETIQUE
16 Rue de Chevry**

**F-77620 Egreville(FR)**

(72) Inventeur: **Lambert, Robert
16, rue de Chevry
F-77620 Egreville(FR)**

(74) Mandataire: **Robert, Jean-Pierre et al
CABINET BOETTCHER 23, rue la Boétie
F-75008 Paris(FR)**

(54) Dispositif de compression de ressorts.

(57) Dans cet appareil, chaque matine (17) est accrochée au fût télescopique (2,7) par un axe (13) pourvu d'une tête (14) de retenue, au moyen d'une platine (16) qui enferme la tête (14) et qui chevauche l'axe (13) en ayant la possibilité de pivoter autour de lui.

FIG. 2

## DISPOSITIF DE COMPRESSION DE RESSORTS

La présente invention concerne un dispositif de montage et démontage de ressorts de compression, notamment de ressorts de suspension de véhicule automobile.

Il est connu, pour démonter des ressorts de suspension, d'utiliser des appareils du genre vérins à vis qui possèdent un fût télescopique dont l'extension ou la rétraction est réalisée au moyen d'un système vis-écrou, la vis étant fixe en translation sur un premier fourreau et l'écrou étant fixe en rotation sur un second fourreau qui coulisse dans le premier fourreau directement ou par le biais d'un fourreau intermédiaire. Chacun de ces fourreaux porte une coupelle, soit coaxiale, soit déportée latéralement par rapport au fût télescopique, qui permet de prendre en charge deux spires du ressort à démonter ou à monter pour comprimer ou décomprimer ce ressort.

Ces coupelles sont en général solidaires des fourreaux ou peuvent être fixées à ces derniers. Elle présente une surface hélicoïdale pour l'appui des spires du ressort. Le pas de cette hélice est fixe, si bien qu'il ne correspond exactement au pas de l'hélice du ressort que dans une seule configuration de celui-ci. Si à partir de cette configuration, on comprime le ressort, ou on le détend, il n'y a plus coïncidence entre le pas des spires des coupelles et celui du ressort qui est contraint pour les spires en contact avec les coupelles d'adopter leur pas, au prix d'une déformation du ressort (cintrage de son axe de symétrie). Cette déformation engendre une modification dans l'orientation des forces importantes en jeu qui tend à déséquilibrer l'ensemble outil de démontage-ressort.

La présente invention entend remédier à cet inconvénient en proposant un outil dans lequel les coupelles en prise avec les ressorts sont constamment adaptées au pas des spires du ressort quel que soit son degré de compression. Elle permet de supprimer par cette disposition la création d'efforts parasites entre l'outil et le ressort pouvant conduire à des déformations, voire des accidents.

A cet effet l'invention a donc pour objet un dispositif de compression de ressorts notamment de suspension de véhicule automobile comportant deux mâchoires de préhension chacune étant attelée latéralement à un tronçon de fût déplaçable télescopiquement par rapport à l'autre au moyen d'un organe de manoeuvre du type système vis-écrou, dans lequel les moyens d'attelage de chaque mâchoire au tronçon correspondant, comprennent un axe solidaire de l'un des éléments mâchoire ou tronçon pourvu à son extrémité d'une tête de retenue et une platine solidaire de l'autre élément comportant deux parois parallèles distantes l'une de l'autre de l'épaisseur de la tête, l'une des parois formant organe de liaison avec cet autre élément, l'autre paroi étant échancrée pour chevaucher l'axe susdit de manière ajustée.

Dans un mode préféré de réalisation l'axe est porté par le fût, tandis que la platine est solidaire de la mâchoire.

D'autres caractéristiques et avantages ressortiront de la description donnée ci-après à titre d'exemple d'un mode de réalisation de l'invention.

Il sera fait référence aux dessins annexés dans lesquels :
- la figure 1 est une vue générale en coupe du dispositif selon l'invention,
- la figure 2 illustre par un schéma en perspective un mode de réalisation des moyens d'attelage d'une mâchoire au fût du dispositif.

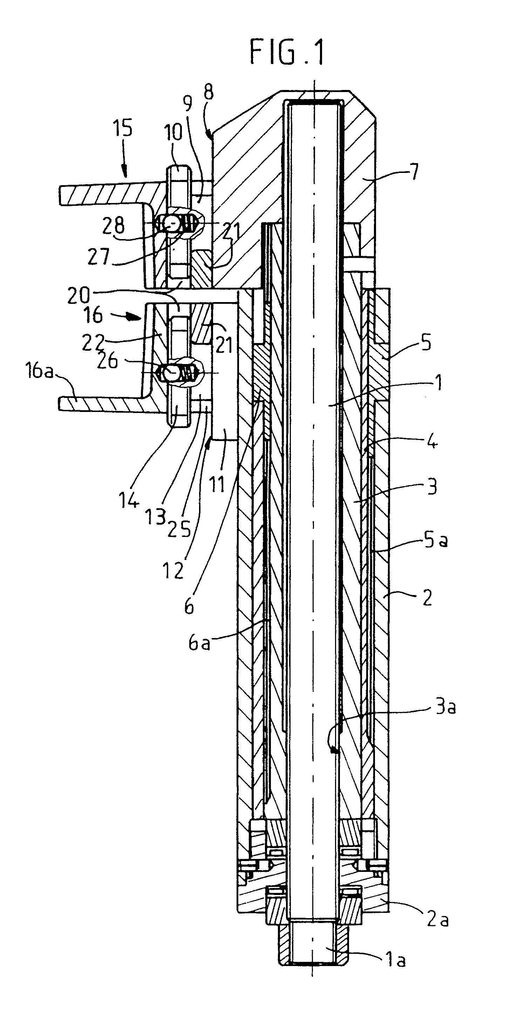

Sur les figures, le dispositif représenté comporte une vis 1 montée à rotation dans le fond 2a d'un tube cylindrique 2 et possédant une extrémité 1a extérieure à ce tube pour sa manoeuvre en rotation. Cette vis coopère avec un écrou 3a formé dans le fond d'un second fourreau tubulaire 3. Ce fourreau tubulaire 3 est arrêté en rotation par rapport au fourreau 1. Dans le cas de figure, le fourreau 3 est monté coulissant dans un fourreau intermédiaire 4 lui-même monté coulissant dans le fourreau 1. Les moyens d'immobilisation en rotation des trois fourreaux entre eux comprennent des clavettes 5 et 6 respectivement disposées entre les fourreaux 2 et 4 et les fourreaux 4 et 3. On comprend au vu de la figure 1 que la rotation de la vis 1, dans un sens déterminé, élève le tube 3 qui coulisse dans le tube 4 jusqu'à ce que l'extrémité de la rainure de clavette 6a entraîne, par la clavette 6, le fourreau 4 en coulissement dans le fourreau 2, sans rotation relative du fait de la présence de la clavette 5 engagée dans la rainure 5a .

L'extrémité libre du fourreau 3 porte une pièce 7 qui forme ferrure de réception d'une mâchoire de compression du ressort à traiter. Cette ferrure 7 comporte une surface plane 8 latérale de laquelle fait saillie perpendiculairement un axe 9 équipé à son extrémité libre, distante de la face 8, une tête de retenue 10.

De même, l'extrémité supérieure du fourreau extérieur 2 porte une ferrure 11 latérale, présentant une surface plane 12 de laquelle fait saillie un axe 13, perpendiculaire à la face 12 et équipé, à son extrémité libre, d'une tête de retenue 14 distante de la face 12, d'une valeur a et parallèle à cette dernière. La tête est oblongue de sorte que sa plus grande longueur est parallèle à l'axe du fût.

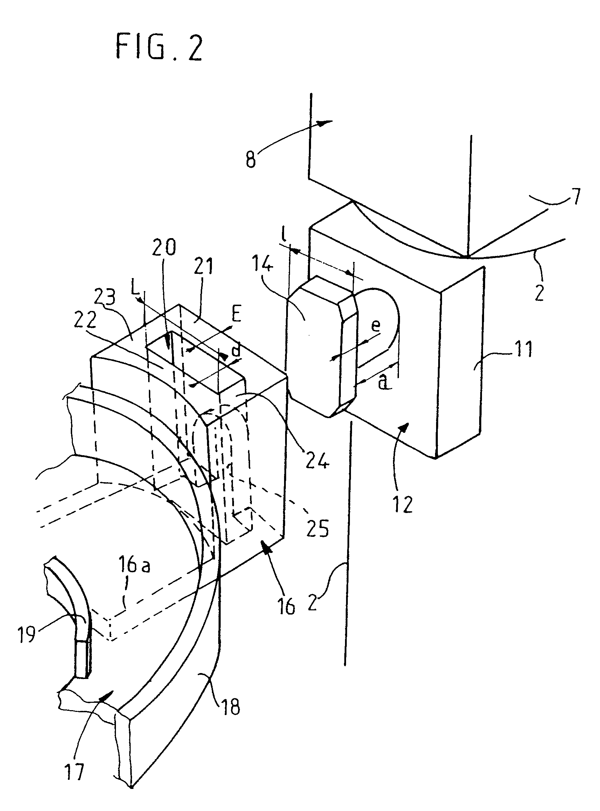

Chacune des ferrures susdites équipées de leur axe à tête reçoit une platine 15, 16 qui constitue le support et le moyen d'attelage d'une mâchoire 17 en forme de portion d'anneau plan, pourvue d'un rebord extérieur 18 et d'un rebord intérieur 19. Cette coupelle, qui n'est pas représentée à la figure 1, est attelée par tout moyen connu, par exemple soudée, à un retour 15a , 16a de la platine correspondante 15, 16, de sorte que la gouttière annulaire de l'une, définie par les rebords 18 et 19, soit tournée vers la gouttière annulaire de l'autre. La partie d'attelage de chaque platine 15, 16 (seule la platine 16 est décrite en regard de la figure 2) comporte un logement intérieur 20 délimité par deux parois frontales parallèles 21 et 22 et deux parois latérales parallèles 23,24 qui forment entretoises (ici en une seule pièce avec les parois précédentes, le logement 20 étant taillé dans la masse de la platine) de solidarisation des parois frontales. La paroi frontale avant 21 est d'une épaisseur E qui sera au plus égale à la valeur a d'écartement de la tête 14 de la surface 12. Afin que l'attelage soit le plus résistant et le plus indéformable, il est souhaitable que E et a correspondent à des tolérances d'ajustement glissant. Le logement 20 est tel que l'écartement d entre les deux faces frontales est légèrement supérieur à l'épaisseur e de la tête 10,14 tandis que la distance L séparant les deux parois latérales 12, 24 est plus importante que la largeur ℓ de cette tête. La paroi frontale avant 21 est échancrée. L'échancrure 25 dont le fond est demi cylindrique est de largeur égale au diamètre de l'axe 9, 13. Ainsi lorsqu'on accouple la platine 15,16 à la ferrure correspondante 7, 11, l'axe 9,13 est logé dans l'échancrure 25 et la tête 10,14 dans le logement 20. Comme le montre la figure 1, où les platines sont attelées aux ferrures, la platine supérieure 15 chevauche l'axe 9 par le bas tandis que la platine inférieure 16 chevauche l'axe 13 par le haut. Les deux platines, donc les deux mâchoires, sont identiques ; seul leur orientation est inverse.

On a noté que la distance L est supérieure à la largeur ℓ de la tête si bien qu'un débattement de la platine est possible autour de l'axe 9,13 qu'elle chevauche, tant que les coins de la tête 10,14 ne viennent pas en butée sur les côtés 23 et 24 du logement. Par cette disposition, les mâchoires peuvent donc s'incliner au contact de la spire du ressort qu'elles emprisonnent pour adopter sa pente et cette inclinaison (rotation autour de l'axe chevauché) peut varier avec le pas des spires en fonction du degré de compression du ressort.

On notera enfin la présence d'un dispositif d'encliquetage (qui n'est représenté que sur la figure 1) du type bille 26 et ressort 27 pour assurer le maintien des mâchoires qui comportent un orifice 28 de réception de la bille (ménagé dans la paroi 22 de la platine) sur les ferrures de l'appareil lors des manipulations de l'ensemble.

L'invention permet une mise en place extrêmement aisée de l'appareil sur un ressort. Il suffit en effet de disposer les coupelles sur les spires choisies et de rentrer le fût télescopique en glissant les axes et têtes dans les platines des mâchoires. La poursuite de la compression du ressort, pour par exemple son démontage, se déroule ensuite en toute sécurité. Lorsque l'on veut détendre un ressort après démontage, il suffit d'inverser la manoeuvre de la vis pour allonger le fût télescopique jusqu'à atteindre la position de repos du ressort.

Bien entendu, on peut, sans sortir du cadre de l'invention, inverser axe avec tête et platines, ces dernières étant alors portées par le fût télescopique tandis que les axes sont portés par les mâchoires.

## Revendications

1. Dispositif de compression de ressorts notamment de suspension de véhicule automobile comportant deux mâchoires (17) de préhension chacune étant attelée latéralement à un tronçon (2,3) de fût déplaçable télescopiquement par rapport à l'autre au moyen d'un organe de manoeuvre du type système vis-écrou (1,3), les moyens d'attelage de chaque mâchoire (17) au tronçon correspondant, comprenant une tête de retenue (10,14) solidaire de l'un des éléments mâchoire ou tronçon et une platine (15,16) solidaire de l'autre élément comportant deux parois parallèles (21,22) distantes l'une de l'autre de l'épaisseur (e ) de la tête (10,14) l'une des parois (22) formant organe de liaison avec cet autre élément, l'autre paroi (21) étant échancrée (25), caractérisé en ce que la tête de retenue (10,14) est attelée à l'élément ou tronçon correspondant par un axe (9,13) cylindrique, en ce que le fond de l'échancrure (25) est demi cylindrique et en ce que les deux parois (21,22) de la platine sont maintenues solidaires l'une de l'autre par des entretoises latérales (23,24) de part et d'autre de l'échancrure et distantes (L) l'une de l'autre, d'une valeur supérieure à la largeur (ℓ) de la tête (10,14).

2. Dispositif selon la revendication 1 caractérisé en ce que l'axe (9,13) d'attelage est perpendiculaire à une surface (2) plane (8,12) portée par l'élément correspondant, la tête (10,14) étant parallèle à et distante (a) de cette surface (8,12) de l'épaisseur (E) de la paroi (21) échancrée.

3. Dispositif selon l'une quelconque des revendications précédentes caractérisé en ce que la tête (10,14) est oblongue, sa plus grande longueur s'étendant sensiblement dans l'axe du fût lorsque la mâchoire est rapportée sur le fût.

4. Dispositif selon l'une quelconque des revendications précédentes caractérisé en ce que la mâchoire comporte une coupelle (17) en portion d'anneau plan.

5. Dispositif selon l'une quelconque des revendications précédentes caractérisé en ce qu'il comporte un élément d'encliquetage (26,27) interposé entre la tête et la paroi (22) non échancrée de la platine (15,16).

# FIG.1

# FIG. 2

**Office européen
des brevets**

# RAPPORT DE RECHERCHE
# EUROPEENNE

Numéro de la demande

**EP 90 40 2897**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 250 638 (H.KLANN)<br>* page 23, ligne 23 - page 24, ligne 15; figures 8-11 *<br>— — — | 1-4 | B 25<br>B 27/30 |
| Y | FR-A-2 055 745 (C.LEBRE)<br>* page 5, ligne 11 - page 5, ligne 34; figures 1, 3 *<br>— — — | 1-4 | |
| A | DE-A-3 208 510 (K.D.KLOSTER)<br>* page 6, ligne 32 - page 6, ligne 38; figures 2, 6 *<br>— — — | 5 | |
| A | US-A-3 384 348 (J.A.WICKER)<br>* colonne 2, ligne 36 - colonne 2, ligne 46; figures 1-5 *<br>— — — | 1 | |
| A | DE-A-3 021 084 (AUGUST BILSTEIN GMBH & CO.KG)<br>* page 11, ligne 1 - page 11, ligne 8; figure 1 *<br>— — — | 1 | |
| A | DE-A-3 335 979 (H.KLANN)<br>* figures 1-7 *<br>— — — — — | 1,4 | |

**DOMAINES TECHNIQUES
RECHERCHES (Int. Cl.5)**

B 25 B

Le présent rapport de recherche a été établi pour toutes les revendications

| Lieu de la recherche | Date d'achèvement de la recherche | Examinateur |
|---|---|---|
| La Haye | 21 janvier 91 | MAJERUS H.M.P. |